# EUROPÄISCHE PATENTSCHRIFT

(11) **EP 3 527 364 B1**
(45) Veröffentlichungstag und Bekanntmachung des Hinweises auf die Patenterteilung: **09.12.2020**
(21) Anmeldenummer: 19152153.3
(22) Anmeldetag: 16.01.2019
(51) Int. Cl.: B32B 17/06, B32B 7/12, B32B 3/02, B32B 27/08, B32B 27/36, B32B 27/40, B32B 27/30

(54) **MEHRLAGIGE SICHERHEITSVORRICHTUNG**
MULTILAYER SECURITY DEVICE
DISPOSITIF DE SÉCURITÉ MULTICOUCHE

(30) Priorität: 19.02.2018 DE 102018202493; 24.07.2018 DE 102018212328
(43) Veröffentlichungstag der Anmeldung: 21.08.2019
(73) Patentinhaber: Haverkamp GmbH, 48165 Münster (DE)
(72) Erfinder: Haverkamp, Ulrich, 48149 Münster (DE)
(74) Vertreter: Rau, Schneck & Hübner Patentanwälte Rechtsanwälte PartGmbB

(56) Entgegenhaltungen:
- WO-A1-2015/144127
- US-A1- 2006 005 483
- US-A1- 2012 070 642
- US-A1- 2013 344 317

## Beschreibung

Die Erfindung betrifft eine mehrlagige Sicherheitsvorrichtung.

Eine mehrlagige Sicherheitsvorrichtung in Form von Sicherheitsglas ist aus DE 695 16 231 T2 bekannt. Auf einem Glassubstrat ist eine komplexe Kunststofffolie aufgebracht mit einer Schicht aus weichgemachtem Polyvinylbutyral (PVB). Insbesondere bei niedrigen Temperaturen von 0° C oder kälter wird PVB spröde. Der Einsatz von PVB in einer mehrlagigen Sicherheitsvorrichtung ist nachteilig. Die komplexe Kunststofffolie, die zur Verbesserung der Sicherheit des Glassubstrats dient, kann insbesondere bei unsachgemäßer Handhabung von dem Glassubstrat abgelöst werden. Weitere mehrlagige Sicherheitsvorrichtung sind bekannt aus WO 2015/144 127 A1 und US 2012/0070642 A1.

Es ist eine Aufgabe der vorliegenden Erfindung, eine mehrlagige Sicherheitsvorrichtung bereitzustellen, die eine erhöhte Sicherheit gewährleistet, indem insbesondere der mehrlagige Verbund stabilisiert und ein unbeabsichtigtes Ablösen einzelner Lagen verhindert ist.

Diese Aufgabe ist erfindungsgemäß gelöst durch eine mehrlagige Sicherheitsvorrichtung mit den im Anspruch 1 angegeben Merkmalen.

Erfindungsgemäß wurde erkannt, dass bei einer mehrlagigen Sicherheitsvorrichtung mit einer mehrlagigen Sicherheitsfolie eine Kantenversiegelung der zumindest außenliegenden Kanten verhindert, dass einzelne Lagen der Sicherheitsfolie abgelöst werden. Eine unbeabsichtigte Beschädigung und/oder Zerstörung der Sicherheitsfolie ist dadurch vermieden. Die Stabilität und die Zuverlässigkeit der Sicherheitsvorrichtung insgesamt ist dadurch erhöht. Insbesondere wurde erkannt, dass freiliegende Kantenbereiche der mehrlagigen Sicherheitsfolie zu einer Beschädigung der Sicherheitsvorrichtung führen können. Dadurch, dass die freiliegenden Kanten der Lagen der Sicherheitsfolie mit der Kantenversiegelung versiegelt sind, ist eine unmittelbar mechanische Einwirkung auf die Kanten, beispielsweise manuell und/oder mittels eines Werkzeugs, verhindert. Die Kanten sind durch die Kantenversiegelung, insbesondere auch vor Witterungseinflüssen geschützt. Die mehrlagige Sicherheitsvorrichtung ist grundsätzlich geeignet für den Außenbereich. Besonders vorteilhaft ist der Einsatz der mehrlagigen Sicherheitsvorrichtung derart, dass die Sicherheitsfolie an einer dem Innenraum zugewandten Seite der Sicherheitsvorrichtung angeordnet ist. Die mehrlagige Sicherheitsfolie ist insbesondere an der Innenseite des transparenten Substrats angebracht, insbesondere daran aufgeklebt. Die mehrlagige Sicherheitsvorrichtung ist insbesondere ein Sicherheitsglas mit Splitterschutzfunktion. Die mehrlagige Sicherheitsfolie ist auf einem transparenten Substrat angebracht. Das Substrat ist insbesondere eine Scheibe und insbesondere eine Glasscheibe. Die Scheibe ist insbesondere eine bewegliche, insbesondere versenkbare, Scheibe wie beispielsweise eine Seitenfensterscheibe eines Kraftfahrzeugs. Durch das Absenken der Seitenscheibe liegt die Oberkante der Scheibe mit der daran angebrachten Sicherheitsfolie frei. Durch die Kantenversiegelung bilden die Sicherheitsfolie und das Substrat eine geschlossene, unzerstörbare Einheit. Ein Abziehen der Sicherheitsfolie von dem Substrat ist zuverlässig verhindert.

Vorteilhafterweise können alle umlaufenden Kantenbereiche der Sicherheitsfolie mit einer Kantenversiegelung an dem Substrat versiegelt sein. Wesentlich ist, dass die Kantenbereiche, die durch das Verfahren der Scheibe zumindest zeitweise und/oder zumindest bereichsweise freigelegt werden, durch die Kantenversiegelung versiegelt sind. Eine besonders kostensparende Ausführung der Sicherheitsvorrichtung ist dadurch geschaffen, dass ausschließlich die Kantenbereiche der Sicherheitsfolie mit der Kantenversiegelung versiegelt sind, die durch ein Verfahren der Scheibe freigelegt werden könnten. Insbesondere ist entbehrlich, beispielsweise seitliche Kantenbereiche der Sicherheitsfolie, die in der Vertikalführung des Scheibenrahmens angeordnet sind, und/oder einen unteren Kantenbereich der Scheibe, der in der Fensteraufnahme der Kraftfahrzeugtür dauerhaft angeordnet ist, mit einer Kantenversiegelung auszuführen.

Die Scheibe kann eben oder gekrümmt ausgeführt sein. Das transparente Substrat kann auch eine Kunststoffscheibe sein. Die mehrlagige Sicherheitsfolie umfasst mehrere Lagen aus einem Kunststoffmaterial. Insbesondere ist die Sicherheitsfolie PVB-frei. An einer dem Substrat abgewandten Außenseite der Sicherheitsfolie ist eine Hart-Beschichtung vorgesehen. Damit ist gewährleistet, dass die mehrlagige Sicherheitsfolie kratzfest und abriebbeständig ausgeführt ist. Die Hart-Beschichtung ist insbesondere auf Basis eines Polyorganosiloxan ausgeführt. Die Hart-Beschichtung ist insbesondere ein Material auf Acrylatbasis, insbesondere ein Acrylat, das unter UV-Strahlung mit Licht in einem Wellenlängenbereich zwischen 10 nm und 380 nm aushärtet.

Eine Sicherheitsfolie gemäß Anspruch 2 hat sich als besonders beständig erwiesen. Die, insbesondere vier, Lagen der Sicherheitsfolie sind insbesondere mit einander verklebt. Insbesondere sind jeweils zwei benachbarte Lagen miteinander verklebt. Zwischen vier Lagen sind beispielsweise drei Klebstoffschichten angeordnet. Die Anzahl der Lagen beträgt insbesondere zwischen zwei und fünfundzwanzig.

Die Ausführung der Lagen gemäß Anspruch 3 hat sich für den Einsatz als Splitterschutzfolie als besonders vorteilhaft erwiesen. Versuche der Patentanmelderin haben angezeigt, dass das verwendete Kunststoffmaterial eine Zähigkeit derart aufweist, dass es sich um die Splitter des Substrats, insbesondere um die Glassplitter, die insbesondere scharfkantig ausgeführt sind, umlegt und die einzelnen Splitter einkapselt. Dadurch kann, anders als bei Splitterschutzfolien gemäß dem Stand der Technik, verhindert werden, dass die scharfkantigen Glassplitter die Schutzfolie durchtrennen. Das Material für die Lagen der Sicherheitsfolie ist insbesondere ein thermoplastisches Elastomer auf Urethanbasis (TPU), insbesondere Polyester und/oder TPU-Folie und/oder EVA-Folie. EVA steht für Ethylen-Vinylacetat-Copolymer. Insbesondere sind mehrere Lagen mit identischer Dicke ausgeführt. Insbesondere weisen sämtliche Lagen eine identische Lagendicke auf. Die Lagendicke beträgt vorteilhafterweise zwischen 0,01 mm bis 0,5 mm, insbesondere 0,02 mm bis 0,4 mm, insbesondere 0,05 mm bis 0,2 mm, insbesondere 0,08 mm bis 0,12 mm und insbesondere 0,1 mm.

Eine Ausführung der Sicherheitsfolie gemäß Anspruch 4 weist eine erhöhte Festigkeit auf. Dadurch, dass benachbarte Lagen mit einem Lagen-Klebstoff miteinander verklebt sind, ist die Sicherheitsfolie in sich stabil. Der Lagen-Klebstoff ist insbesondere auf Acrylatbasis ausgeführt. Der Lagen-Klebstoff ist insbesondere selbstklebend, insbesondere ein Haftkleber. Der Lagen-Klebstoff ist insbesondere als PSA-Klebstoff ausgeführt. Der Lagen-Klebstoff weist eine Schichtdicke auf, die kleiner ist als die Lagendicke der einzelnen Lagen. Insbesondere beträgt die Schichtdicke zwischen 0,005 mm und 0,05 mm, insbesondere zwischen 0,01 mm und 0,03 mm, insbesondere zwischen 0,015 mm und 0,025 mm und insbesondere 0,02 mm.

Vorgespannte Lagen der Sicherheitsfolie gemäß Anspruch 5 ermöglichen eine verbesserte Absorption einer Krafteinwirkung von außen, insbesondere durch das Aufschlagen eines Gegenstands wie beispielsweise einem Stein oder einem Hammer oder ein Geschoss einer Feuerwaffe. Insbesondere sind die einzelnen Lagen unidirektional, also entlang einer Richtung, vorgespannt. Es ist vorteilhaft, die unidirektional vorgespannten Lagen derart anzuordnen, dass die Richtungen der unidirektionalen Vorspannungen voneinander abweichen und insbesondere zueinander senkrecht orientiert sind. Insbesondere unterscheiden sich die Richtungen der Vorspannungen benachbarter Lagen der Sicherheitsfolie. Es ist auch denkbar, dass die Lagen biaxial, also zweiachsig, vorgespannt sind. Es ist auch denkbar, ein- und zweiachsig vorgespannte Lagen miteinander zu einer Sicherheitsfolie zu kombinieren.

Eine Ausführung der Sicherheitsvorrichtung gemäß Anspruch 6 ist besonders stabil. Die Sicherheitsfolie ist zuverlässig an dem Substrat gehalten. Die Schichtdicke des Substrat-Klebstoffs ist insbesondere identisch mit der Schichtdicke des Lagen-Klebstoffs. Insbesondere beträgt die Schichtdicke des Substrat-Klebstoffs zwischen 0,005 mm und 0,05 mm, insbesondere zwischen 0,01 mm und 0,03 mm, insbesondere zwischen 0,015 mm und 0,025 mm und insbesondere 0,02 mm. Der Substrat-Klebstoff ist insbesondere ein Klebstoff auf Acrylatbasis, insbesondere ein Acrylatkleber.

Eine Ausführung der Lagen gemäß Anspruch 7 ermöglicht eine vorteilhafte, weil fertigungstechnisch zuverlässig ausführbare und damit robuste Kantenversiegelung. Mit den geneigten Kanten schmiegen sich die Lagen an das Substrat, das insbesondere eine Rundung aufweist, vorteilhaft an. Ein Spalt zwischen der Sicherheitsfolie und dem Substrat ist vermieden.

Ein derartiger Spalt könnte Ausgangspunkt für die Folienablösung sein. Die Verbindung zwischen dem Substrat und der mehrlagigen Sicherheitsfolie ist dadurch verbessert. Das Risiko des unbeabsichtigten Abtrennens der Sicherheitsfolie von dem Substrat durch vorstehende Kanten ist ausgeschlossen.

Eine Kantenversiegelung gemäß Anspruch 8 ermöglicht eine unkomplizierte und schnelle Anbringung der Versiegelung.

Eine Kantenversiegelung gemäß Anspruch 9 ermöglicht eine Ausweitung der Versiegelung auf das Substrat und/oder die Hart-Beschichtung.

Eine Kantenversiegelung gemäß Anspruch 10 weist eine erhöhte Festigkeit auf. Die einzelnen Schichten der Sicherheitsvorrichtung sind mechanisch aneinander gehalten und insbesondere stoffschlüssig miteinander verbunden.

Ein Ausführungsbeispiel der Erfindung wird nachfolgend anhand der Zeichnung näher erläutert. In dieser zeigen:
- Fig. 1: eine schematische Querschnitt-Darstellung einer mehrlagigen Sicherheitsvorrichtung gemäß der Erfindung,
- Fig. 2: eine vergrößerte Detailansicht gemäß Detail II in Fig. 1,
- Fig. 3: eine Fig. 1 entsprechende Darstellung einer Sicherheitsvorrichtung gemäß einem weiteren Ausführungsbeispiel,
- Fig. 4: eine vergrößerte Detailansicht gemäß Detail IV in Fig. 3.

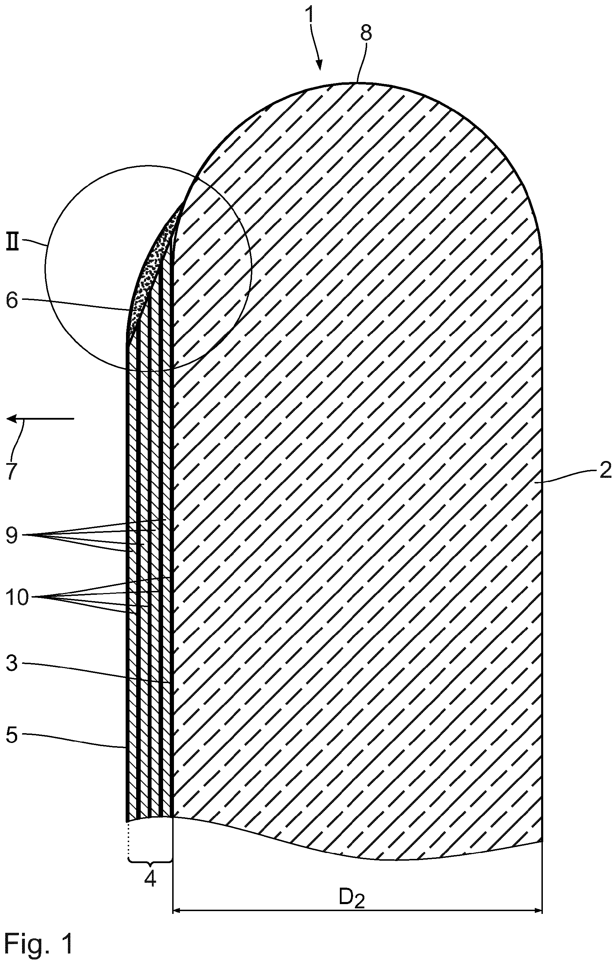

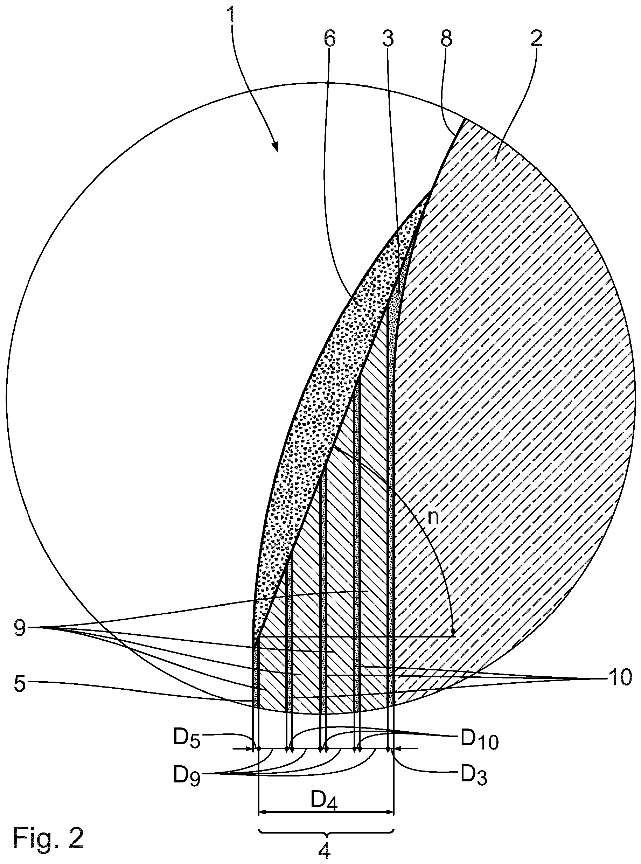

Eine in Fig. 1 und Fig. 2 als Ganzes mit 1 bezeichnete mehrlagige Sicherheitsvorrichtung umfasst eine Glasscheibe als transparentes Substrat 2, eine an dem Substrat 2 mittels eines Substrat-Klebstoffs 3 befestigte mehrlagige Sicherheitsfolie 4 und eine an der Außenseite der Sicherheitsfolie 4 angebrachte Hart-Beschichtung 5.

Freiliegende Kanten des Substrats 2, des Substrat-Klebestoffs 3, der Sicherheitsfolie 4 und der Hart-Beschichtung 5 sind durch eine Kantenversiegelung 6 versiegelt. Die Kantenversiegelung 6 deckt die freien Oberflächen an den jeweiligen Stirnseiten am Substrat 2, an dem Substrat-Klebstoff 3, an der Sicherheitsfolie 4 und an der Hart-Beschichtung 5 zuverlässig ab. Diese stirnflächigen Kantenbereiche sind durch die Kantenversiegelung 6 geschützt. Die Kantenversiegelung 6 ist derart ausgeführt, dass sie in Dickenrichtung 7 mit dem mehrlagigem Verbund bündig abschließt, also an der äußeren Oberfläche der Hart-Beschichtung 5 und an der äußeren Oberfläche des Substrats 2 in Dickenrichtung 7 nicht überragt.

Die Kantenversiegelung 6 erstreckt sich insbesondere auf Kantenbereiche der Sicherheitsvorrichtung 1, die bei der Anwendung der Sicherheitsvorrichtung 1 zumindest bereichsweise und/oder zumindest zeitweise freiliegen. An den geschützten Kantenbereichen der Sicherheitsvorrichtung 1 ist die Kantenversiegelung 6 entbehrlich.

Wesentlich ist, dass die Kantenversiegelung 6 sich zumindest bereichsweise entlang der äußeren Kanten der Sicherheitsvorrichtung 1 erstreckt. Bei einer versenkbaren Scheibe 2, beispielsweise in der Fahrer- oder Beifahrertür eines Kraftfahrzeugs, insbesondere eines Automobils, ist das insbesondere die Oberkante der Sicherheitsvorrichtung 1. Die seitlichen Kanten und die Unterkante der Scheibe 2 sind in seitlichen Führungen bzw. im Fahrzeugrahmen geführt und dadurch geschützt. Die Glasscheibe 2 ist insbesondere eine Autoscheibe, die insbesondere einfach oder mehrfach gekrümmt ausgeführt sein kann.

Die Scheibe 2 trennt einen Innenbereich des Automobils, den Fahrgastraum, von einer äußeren Umgebung. Der Fahrgastraum ist gemäß Fig. 1 linksseitig der Scheibe angeordnet. Der Außenbereich ist rechtsseitig der Scheibe 2 angeordnet.

Es sind auch Anwendungen denkbar, bei welchen mehr als ein Kantenbereich, insbesondere der vollständige, also umlaufende Kantenbereich der Sicherheitsvorrichtung 1 mit der Kantenversiegelung 6 ausgeführt ist.

Die Sicherheitsfolie 4 und die Kantenversiegelung 6 sind an einer dem Fahrgastraum des Automobils zugewandten Innenfläche der Scheibe 2 angeordnet.

Wesentlich ist, dass das Material der Kantenversiegelung 6 derart gewählt ist, dass es mit sämtlichen Materialien, deren Kantenbereiche zu versiegeln sind, eine stoffschlüssige Verbindung eingehen kann. Im vorliegenden Fall ist das das Material der Hart-Beschichtung 5, der Lagen 9 des Lage-Klebers 10, des Substrats-Klebstoffs 3 und des Substrats 2.

Die äußere Kantenfläche 8 der Glasscheibe 2 ist konvex gekrümmt. Die Glasscheibe 2 weist eine abgerundete, insbesondere halbkreisförmige, Kantenfläche 8 auf. Die Glasscheibe 2 weist eine Dicke D₂, die zwischen 1 mm und 10 mm, insbesondere zwischen 2 mm und 8 mm, insbesondere zwischen 2,5 mm und 6 mm, insbesondere 3 mm und 5 mm, insbesondere zwischen 3,5 mm und 4,5 mm und insbesondere 4 mm beträgt.

Der Substrat-Kleber 3 weist eine, insbesondere im Wesentlichen konstante, Schichtdicke D₃ von 0,02 mm auf. In einem oberen, der Kantenversiegelung 6 zugewandten Bereich ist die Schicht mit dem Substrat-Kleber 3 im Wesentlichen keilförmig ausgeführt, so dass der Zwischenraum zwischen der Sicherheitsfolie 4 und der Glasscheibe 2 vollständig ausgefüllt ist. In dem oberen Bereich ist der Zwischenraum keilförmig aufweitend ausgeführt wegen der gekrümmten Kantenfläche der Glasscheibe 2.

Der Substrat-Kleber 3 ermöglicht eine schnelle Oberflächenhärtung, insbesondere unter UV-Strahlung. Der Substrat-Kleber basiert auf Acrylat. Eine Sekundärhärtung ist nicht erforderlich. Der Substrat-Kleber weist eine Härte von Shore D 60 bis 75, insbesondere Shore D 65 bis 70 auf. Der Substrat-Kleber weist eine Viskosität von höchstens 6.000 mPa • s, insbesondere von höchstens 5.500 mPa • s auf.

Die Sicherheitsfolie 4 weist vier Lagen 9, die gemäß dem gezeigten Ausführungsbeispiel als Polyester-TPU-Folien ausgeführt sind. Die Lagen 9 weisen jeweils eine Lagendicke D₉ von 0,1 mm auf.

Die Lagen 9 der Sicherheitsfolie 4 können auch unterschiedliche Lagendicken D₉ aufweisen. Insbesondere ist es möglich, dass benachbarte Lagen 9 unterschiedliche Lagendicken aufweisen. Es ist insbesondere auch möglich, dass sämtliche Lagen 9 jeweils voneinander unterschiedlichen Lagendicken aufweisen, dass also sich alle Lagen 9 bezüglich ihrer Lagendicke D₉ voneinander unterscheiden.

Die Lagen 9 sind insbesondere aus thermoplastischen Materialien, aus Polyester-Materialien, aus Polyurethan-Materialien, aus Polycarbonat-Materialien, aus kristallinen Polyethylenterephthalat (CPET)-Materialien und/oder aus Polyethylenterephthalat (PBT)-Materialen hergestellt.

Jeweils zwei benachbarte Lagen 9 sind mit einem Lagen-Klebstoff 10 auf Acrylatbasis miteinander verklebt. Die Schichtdicke D₁₀ des Lagen-Kleberstoffs 10 beträgt 0,02 mm.

Die jeweilige Schichtdicke D₁₀ des Lagen-Klebstoffs 10 kann unterschiedlich festgelegt sein. Insbesondere kann die Schichtdicke D₁₀ der verschiedenen Lagen des Lagen-Klebstoffs 10 unterschiedlich gewählt werden. Insbesondere unterscheiden sich die Schichtdicken D₁₀ der unterschiedlichen Lagen des Lagen-Klebstoffs 10.

Die freiliegenden Kanten der Lagen 9 sind gegenüber der Dickenrichtung 7 mit einem Neigungswinkel n angeschrägt. Gemäß dem gezeigten Ausführungsbeispiel beträgt der Neigungswinkel etwa 70°. Der Neigungswinkel n ist insbesondere derart ausgeführt, dass die Kantenversiegelung 6 besonders vorteilhaft sowohl mit der Glasscheibe 2 einerseits als auch mit der Sicherheitsfolie 4 andererseits verbindbar ist.

Die Lagen 9 sind insbesondere derart versetzt zueinander angeordnet, dass sie entlang der geneigten Richtung der freiliegenden Kanten fluchtend angeordnet sind. Die freiliegenden Kanten der Lagen 9 bilden eine gemeinsame, abgeschrägte Kante. Besonders vorteilhaft ist es, wenn auch die Schichten des Lagen-Klebstoffs 10 und des Substrat-Klebstoffs 3 entsprechend angeschrägt sind. Die Sicherheitsfolie 4 insgesamt ist mit dem Neigungswinkel n angeschrägt und weist eine gemeinsame, geschlossene Oberfläche auf. Die Verbindung mit der Kantenversiegelung 3 ist verbessert, aber insbesondere eine geschlossene Kontaktfläche der Kantenversiegelung 6 ausgebildet werden kann. Insbesondere ist die Neigung der Sicherheitsfolie 4 derart orientiert und bezüglich der Glasscheibe 2 derart angeordnet, dass die geneigte Oberseite eine Tangente an die äußere Kantenfläche 8 der Glasscheibe 2 bildet. Dadurch ist ein kantenfreier Übergang zwischen der Glasscheibe 2 und der Sicherheitsfolie 4 gewährleistet.

Die Hart-Beschichtung 5 ist insbesondere unmittelbar auf der äußeren Oberfläche der Sicherheitsfolie 4, insbesondere an der dem Substrat 2 abgewandten Lage 9 aufgebracht. Die Hart-Beschichtung 5 weist eine Schichtdicke Ds zwischen 1 µm und 10 µm auf.

Die Kantenversiegelung 6 ist insbesondere ein Klebstoff, der unter UV-Licht aushärtet, insbesondere bei UV-Strahlung mit einer Wellenlänge von 265 nm. Es sind auch Klebstoffe denkbar, die bei anderen Wellenlängenbereichen aushärten. Es ist auch denkbar, dass der Klebstoff durch Wärmeeintrag aushärtet und/oder unter chemischer Vernetzung.

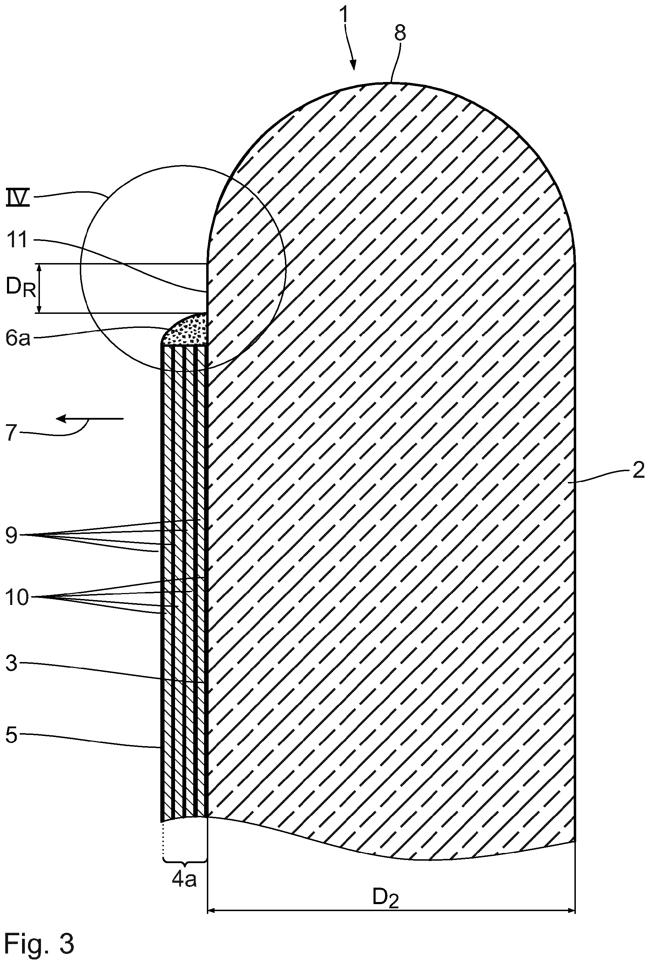

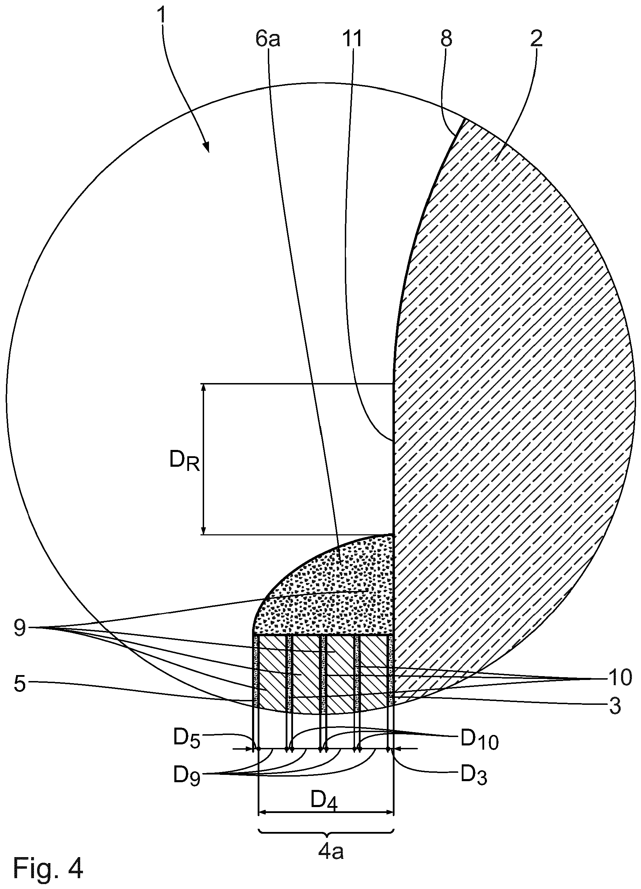

Im Folgenden wird unter Bezugnahme auf die Fig. 3 und 4 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem ersten Ausführungsbeispiel besteht darin, dass die Sicherheitsfolie 4a mit einem Randabstand D_{R} an dem transparenten Substrat 2 angeordnet ist. Im Bereich des Randabstands D_{R} liegt das transparente Substrat 2 frei. Gemäß dem gezeigten Ausführungsbeispiel beträgt der Randabstand D_{R} 1 cm. In Abhängigkeit der Anwendung kann der Randabstand D_{R} auch mehr als 1 cm oder weniger als 1 cm betragen.

Als Randabstand D_{R} ist der Abstand der Kantenversiegelung 6a bis zu der äußeren Kantenfläche 8 des Substrats 2 definiert.

Ein weiterer Unterschied besteht darin, dass die freien Kanten der Lagen 9 ohne Neigung ausgeführt sind, d.h. der Neigungswinkel n beträgt 0°.

Durch den Randabstand D_{R} wird ein freiliegender Randbereich definiert, der mit dem Bezugszeichen 11 in Fig. 3 bezeichnet ist. Der Randbereich 11 kann sich entlang einer einzigen äußeren Kante des Substrats 2 erstrecken. Der Randbereich 11 kann sich aber auch entlang mehrerer, insbesondere miteinander verbundener, Kantenbereiche des Substrats 2 erstrecken. Der Randbereich 11 kann insbesondere umlaufend an dem Substrat 2 ausgeführt sein. Es ist auch denkbar, dass sich der Randbereich 11 nur bereichsweise entlang einer Kanten des Substrats 2 erstreckt.

## Patentansprüche

1. Mehrlagige Sicherheitsvorrichtung (1) mit
a. einem transparenten Substrat (2),
b. einer mehrlagigen Sicherheitsfolie (4), die mehrere Lagen (9) aus einem Kunststoffmaterial aufweist, wobei die Sicherheitsfolie (4) an dem Substrat (2) befestigt ist,
c. einer an einer dem Substrat (2) abgewandten Außenseite der Sicherheitsfolie (5) angeordneten Hart-Beschichtung (5),
d. einer Kantenversiegelung (6), die zumindest außen liegende Kanten der mehrlagigen Sicherheitsfolie (4) versiegelt,
**dadurch gekennzeichnet, dass** die Kantenversiegelung (6) in Dickenrichtung (7) an der äußeren Oberfläche der Hart-Beschichtung (5) und an der äußeren Oberfläche des Substrats (2) bündig abschließt.

2. Sicherheitsvorrichtung gemäß Anspruch 1, **dadurch gekennzeichnet, dass** die Sicherheitsfolie (4) mindestens zwei Lagen (9) und höchstens fünfundzwanzig Lagen (9), insbesondere vier Lagen (9), aufweist.

3. Sicherheitsvorrichtung gemäß einem der vorstehenden Ansprüche, **dadurch gekennzeichnet, dass** die Lagen (9) aus thermoplastischen Materialien, insbesondere aus Polyurethan-Materialien, aus Polycarbonat-Materialien, aus kristallinen Polyethylenterephthalat-Materialien, aus Polyethylenterephthalat-Materialien und/oder aus PolyesterMaterialien ausgeführt sind, insbesondere Polyester aufweisen und insbesondere als Polyester und/oder mit TPU-Folien und/oder mit EVA-Folien ausgeführt sind.

4. Sicherheitsvorrichtung gemäß einem der vorstehenden Ansprüche, **dadurch gekennzeichnet, dass** benachbarte Lagen (9) mittels eines Lagen-Klebstoffs (10), insbesondere auf Acrylatbasis, miteinander verklebt sind.

5. Sicherheitsvorrichtung gemäß einem der vorstehenden Ansprüche, **dadurch gekennzeichnet, dass** die Lagen (9) in einer Ebene, die senkrecht zur Dickenrichtung (7) der Lagen (9) orientiert ist, jeweils eine Vorspannung aufweisen, wobei sich die Vorspannungen von mindestens zwei Lagen (9) bezüglich Betrag und/oder Richtung unterscheiden.

6. Sicherheitsvorrichtung gemäß einem der vorstehenden Ansprüche, **dadurch gekennzeichnet, dass** die Sicherheitsfolie (4) mit einem Substrat-Klebstoff (3) an dem Substrat (2) verklebt ist.

7. Sicherheitsvorrichtung gemäß einem der vorstehenden Ansprüche, **dadurch gekennzeichnet, dass** jeweils mindestens eine außenliegende Kante der Lagen (9) bezüglich der Dickenrichtung (7) der Lagen (9) mit einem Neigungswinkel (n) geneigt ausgeführt ist.

8. Sicherheitsvorrichtung gemäß einem der vorstehenden Ansprüche, **dadurch gekennzeichnet, dass** die Kantenversiegelung (6) einen aushärtbaren Klebstoff aufweist, der insbesondere unter Lichteinstrahlung, insbesondere in einem Wellenlängenbereich von 10 nm bis 380 nm, aushärtet.

9. Sicherheitsvorrichtung gemäß einem der vorstehenden Ansprüche, **dadurch gekennzeichnet, dass** die Kantenversiegelung (6) das Substrat (2) und/oder die Hart-Beschichtung (5) versiegelt.

10. Sicherheitsvorrichtung gemäß Anspruch 9, **dadurch gekennzeichnet, dass** die Kantenversiegelung (6) ein Material aufweist, das geeignet ist sich mit jeweils dem Material des Substrats (2), der Lagen (9), des Lagen-Klebstoffs (10), des Substrat-Klebstoffs (3) und/oder der Hart-Beschichtung (5) stoffschlüssig zu verbinden.

11. Sicherheitsvorrichtung gemäß einem der vorstehenden Ansprüche, **dadurch gekennzeichnet, dass** die Sicherheitsvorrichtung (1) geeignet ist einen Innenraum von einem Außenbereich zu trennen wobei die Sicherheitsfolie (4) an der dem Innenraum zugewandten Seite der Sicherheitsvorrichtung (1) und/oder an der dem Außenbereich zugewandten Seite der Sicherheitsvorrichtung (1) angeordnet ist.

## Claims

1. Multilayer security device (1), having
a. a transparent substrate (2),
b. a multilayer security film (4) having a plurality of layers (9) of a plastics material, wherein the security film (4) is attached to the substrate (2),
c. a hard coat (5) arranged on an outer side of the security film (5) facing away from the substrate (2),
d. an edge seal (6) sealing at least edges of the multilayer security film (4) that are located outside,
**characterized in that** the edge seal (6) terminates flush in the thickness direction (7) at the outer surface of the hard coat (5) and at the outer surface of the substrate (2).

2. Security device according to Claim 1, **characterized in that** the security film (4) has at least two layers (9) and at most twenty-five layers (9), in particular four layers (9).

3. Security device according to either of the preceding claims, **characterized in that** the layers (9) are made from thermoplastic materials, in particular from polyurethane materials, polycarbonate materials, crystalline polyethylene terephthalate materials, polyethylene terephthalate materials and/or polyester materials, in particular include polyester and in particular are designed as polyester and/or with TPU films and/or with EVA films.

4. Security device according to one of the preceding claims, **characterized in that** adjacent layers (9) are bonded to one another by means of a layer adhesive (10), in particular on acrylate basis.

5. Security device according to one of the preceding claims, **characterized in that** in each case the layers (9) have a prestress in a plane oriented perpendicular to the thickness direction (7) of the layers (9), wherein the prestresses of at least two layers (9) differ in terms of absolute value and/or direction.

6. Security device according to one of the preceding claims, **characterized in that** the security film (4) is bonded to the substrate (2) with a substrate adhesive (3).

7. Security device according to one of the preceding claims, **characterized in that** in each case at least one outer edge of the layers (9) is designed to be inclined relative to the thickness direction (7) of the layers (9) at an inclination angle (n).

8. Security device according to one of the preceding claims, **characterized in that** the edge seal (6) includes a curable adhesive that cures in particular under the irradiation of light, in particular in a wavelength range from 10 nm to 380 nm.

9. Security device according to one of the preceding claims, **characterized in that** the edge seal (6) seals the substrate (2) and/or the hard coat (5).

10. Security device according to Claim 9, **characterized in that** the edge seal (6) includes a material that is suitable for forming an integral bond in each case with the material of the substrate (2), of the layers (9), of the layer adhesive (10), of the substrate adhesive (3) and/or of the hard coat (5).

11. Security device according to one of the preceding claims, **characterized in that** the security device (1) is suitable for separating an interior space from an exterior region, wherein the security film (4) is arranged on the side of the security device (1) facing the interior space and/or on the side of the security device (1) facing the exterior region.

## Revendications

1. Dispositif de sécurité (1) multicouche avec
a. un substrat (2) transparent,
b. un film de sécurité (4) multicouche, qui présente plusieurs couches (9) composées d'un matériau en plastique, dans lequel le film de sécurité (4) est fixé sur le substrat (2),
c. un revêtement dur (5) disposé sur un côté extérieur, opposé au substrat (2), du film de sécurité (5),
d. un scellement d'arêtes (6), qui scelle des arêtes situées au moins côté extérieur du film de sécurité (4) multicouche,
**caractérisé en ce que** le scellement d'arêtes (6) se termine dans le sens de l'épaisseur (7) en affleurement avec la surface extérieure du revêtement dur (5) et avec la surface extérieure du substrat (2).

2. Dispositif de sécurité selon la revendication 1, **caractérisé en ce que** le film de sécurité (4) présente au moins deux couches (9) et au maximum vingt-cinq couches (9), en particulier quatre couches (9).

3. Dispositif de sécurité selon l'une quelconque des revendications précédentes,
**caractérisé en ce que** les couches (9) sont réalisées à partir de matériaux thermoplastiques, en particulier à partir de matériaux à base de polyuréthane, à partir de matériaux à base de polycarbonate, à partir de matériaux cristallins à base de polytéréphtalate d'éthylène, à base de matériaux à base de polytéréphtalate d'éthylène et/ou à partir de matériaux à base de polyester, présentent en particulier du polyester et sont réalisés en particulier en tant que polyester et/ou avec des films en TPU et/ou avec des films en EVA.

4. Dispositif de sécurité selon l'une quelconque des revendications précédentes, **caractérisé en ce que** des couches (9) voisines sont collées les unes aux autres au moyen d'une colle de couches (10), en particulier à base d'acrylate.

5. Dispositif de sécurité selon l'une quelconque des revendications précédentes, **caractérisé en ce que** les couches (9) présentent dans un plan, qui est orienté de manière perpendiculaire par rapport au sens de l'épaisseur (7) des couches (9), respectivement une précontrainte, dans lequel les précontraintes d'au moins deux couches (9) se distinguent en termes de valeur et/ou de direction.

6. Dispositif de sécurité selon l'une quelconque des revendications précédentes
**caractérisé en ce que** le film de sécurité (4) est collé avec une colle de substrat (3) sur le substrat (2).

7. Dispositif de sécurité selon l'une quelconque des revendications précédentes,
**caractérisé en ce que** respectivement au moins une arête située côté extérieur des couches (9) est réalisée de manière inclinée avec un angle d'inclinaison (n) par rapport au sens de l'épaisseur (7) des couches (9).

8. Dispositif de sécurité selon l'une quelconque des revendications précédentes, **caractérisé en ce que** le scellement d'arêtes (6) présente une colle durcissable, qui durcit en particulier sous l'effet d'un rayonnement de lumière incidente en particulier dans une plage de longueurs d'onde de 10 nm à 380 nm.

9. Dispositif de sécurité selon l'une quelconque des revendications précédentes,
**caractérisé en ce que** le scellement d'arêtes (6) scelle le substrat (2) et/ou le revêtement dur (5).

10. Dispositif de sécurité selon la revendication 9, **caractérisé en ce que** le scellement d'arêtes (6) présente un matériau, qui est adapté pour être relié par liaison de matière à respectivement le matériau du substrat (2), aux couches (9), à la colle de couches (10), à la colle de substrat (3) et/ou au revêtement dur (5).

11. Dispositif de sécurité selon l'une quelconque des revendications précédentes,
**caractérisé en ce que** le dispositif de sécurité (1) est adapté pour séparer un espace intérieur d'une zone extérieure, dans lequel le film de sécurité (4) est disposé au niveau du côté, tourné vers l'espace intérieur, du dispositif de sécurité (1) et/ou sur le côté, tourné vers la zone extérieure, du dispositif de sécurité (1).
